Europäisches Patentamt

European Patent Office

Office européen des brevets

(11) Veröffentlichungsnummer: **0 160 911**
**A2**

(12) **EUROPÄISCHE PATENTANMELDUNG**

(21) Anmeldenummer: **85105188.8**

(22) Anmeldetag: **29.04.85**

(51) Int. Cl.⁴: **C 08 F 297/06**
**H 01 B 1/12**

(30) Priorität: **11.05.84 DE 3417442**

(43) Veröffentlichungstag der Anmeldung:
**13.11.85 Patentblatt 85/46**

(84) Benannte Vertragsstaaten:
**BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Klein, Rainer, Dr.**
**Am Vogelgesang 44**
**D-6239 Eppstein/Taunus(DE)**

(54) **Polyacetylen-Formmasse, Verfahren zu ihrer Herstellung und ihre Verwendung.**

(57) Polyacetylen-Formmassen, welche aus einem hochdichten kristallinen Polyolefin und Polyacetylen bestehen, sind thermoplastisch verarbeitbar. Durch Änderung des Mengenverhältnisses Polyolefin/Polyacetylen lassen sich die mechanischen und elektrischen Eigenschaften derartiger Formmassen dem gewüschten Einsatzzweck anpassen. Die Formmassen können verwendet werden zum Herstellen elektrisch leitfähiger Kunststoff-Formteile.

Croydon Printing Company Ltd.

0160911

HOECHST AKTIENGESELLSCHAFT          HOE 84/F 104    Dr.DA/mk

Polyacetylen-Formmasse, Verfahren zu ihrer Herstellung und ihre Verwendung

Es ist bekannt, daß man Acetylen in Gegenwart von metall-organischen Mischkatalysatoren (Ziegler-Natta-Katalysato-ren) zu Polyacetylen polymerisieren kann, wobei je nach den gewählten Reaktionsbedingungen Polyacetylen entweder als Folie oder als Pulver entsteht (vgl. Deutsche Offenlegungsschriften 30 30 194, 31 20 441 und 32 07 857; Europäische Patentanmeldungen 45 908 und 62 212).

Von besonderem Interesse sind die elektrischen Eigenschaften des Polyacetylens. Die elektrische Leitfähigkeit läßt sich durch Dotieren mit Elektronenakzeptoren bzw. Elektronendonatoren in einem Intervall von $\delta = 10^{-9} - 10^3$ ($\Omega^{-1}cm^{-1}$) gezielt einstellen. Man gelangt damit von der Leitfähigkeit eines Isolators über die von Halbleitern bis hin zur metallischen Leitfähigkeit. Derartige Materialien könnten zur Herstellung von Batterien, bleifreien Akkumulatoren, Sonnenzellen etc. sowie zur antistatischen Ausrüstung von Kunststoffen verwendet werden.

Polyacetylen weist jedoch einige gravierende Nachteile auf: neben seiner Unlöslichkeit in Lösungsmitteln ist es nicht schmelzbar, so daß eine thermoplastische Verarbeitung nicht möglich ist. Außerdem tritt beim Stehen an der Luft Oxidation ein, was zu rascher Brüchigkeit und damit zu einer Verschlechterung der mechanischen Eigenschaften führt.

Diese unerwünschten Eigenschaften versuchte man dadurch zu verringern, daß man Blends aus Polyacetylen mit Polymeren herstellte, welche elastomeren Charakter besitzen. So wurden beispielsweise Cis-1,4-Polybutadien, Styrol-Butadien-Styrol Elastomere und Ethylen-Propylen-Dien-Terpolymere in einem Kohlenwasserstoff gelöst, Titantetrabutylat und Aluminiumtriethyl als Katalysator zugegeben und das Lösungsmittel im Vakuum verdampft. Es bildete sich ein Elastomerfilm aus, der mit dem Mischkatalysator imprägniert war und anschließend mit Acetylen begast wurde, was zu flexiblen Polyacetylenfilmen führte.

Weiterhin ist ein Verfahren zur Herstellung von Blockpolymeren aus Dienen mit Acetylenkohlenwasserstoffen bekannt, bei welchen z.B. Butadien in Lösung zunächst mit Butyl-Li polymerisiert wird und man nach Abdestillieren des Lösungsmittels das "lebende Polybutadien" in Dispersion mit Phenylacetylen behandelt (vgl. [SU-Anmeldung 290905]).

Nach diesem Verfahren werden Produkte erhalten, in denen Polyacetylen in einer Elastomermatrix eingelagert ist und die Produkteigenschaften demzufolge überwiegend von den Eigenschaften der Elastomerkomponente bestimmt werden. Daher lassen sich erfahrungsgemäß diese Produkte nicht thermoplastisch verarbeiten. Somit ist beispielsweise die Herstellung von Formkörpern im Spritzgießverfahren oder Folien nach dem Extrusionsverfahren nicht möglich. Ein weiterer Nachteil besteht in der energieintensiven Abdestillation des Lösungsmittels.

In einer weiteren Variante wurde eine LDPE-Folie mit der Lösung eines Ziegler-Natta-Katalysators imprägniert und mit Acetylen begast.

Die nach diesem Verfahren anfallenden Produkte enthalten jedoch nur vergleichsweise geringe Anteile an Polyacetylen (bis ca. 13 %), so daß in der Formmasse die technisch interessanten Eigenschaften des Polyacetylens nur sehr bedingt vorhanden sind. Ein weiterer Nachteil liegt in der Folienform, welche eine allgemeine Verwendung für die Spritzgieß- und Extrusionsverarbeitung ausschließt.

Es bestand somit ein Bedarf für ein thermoplastisch
verarbeitbares Polyacetylen.

Es wurde gefunden, daß Formmassen aus hochdichtem kristallinem Polyolefin und Polyacetylen thermoplastisch verarbeitbar sind, wobei sich durch Änderung des Mengenverhältnisses
Polyolefin/Polyacetylen die mechanischen und elektrischen
Eigenschaften variieren lassen.

Gegenstand der Erfindung ist somit ein Verfahren zur Herstellung einer Polyacetylen-Formmasse, bestehend aus 95
bis 40 Gew-% eines hochdichten kristallinen Polyolefins
und 5 bis 60 Gew-% Polyacetylen, welches darin besteht,
daß man in der ersten Stufe mindestens ein 1-Olefin mit 2
bis 10 Kohlenstoffatomen bei einer Temperatur von 0 bis
120°C und einem Druck von 1 bis 10 bar in Gegenwart eines
Mischkatalysators, welcher aus einer halogenhaltigen Verbindung eines Metalls der IV. bis VI. Nebengruppe des Pe-
Periodensystems (Komponente I) und einer metallorganischen
Verbindung eines Metalls der I. bis III. Hauptgruppe des
Periodensystems (Komponente II) besteht, polymerisiert und
in der zweiten Stufe die Polymerisation von Acetylen bei
einer Temperatur von 0 bis 120°C und einem Druck von 0
bis 1,5 bar unter Zugabe zusätzlicher Mengen der Katalysatorkomponente II durchführt.

Die erfindungsgemäß hergestellte Polyacetylen-Formmasse
besteht aus 95 bis 40, vorzugsweise 85 bis 50, insbesondere 80 bis 50 Gew-% eines hochdichten kristallinen Polyolefins und 5 bis 60, vorzugsweise 15 bis 50, insbesondere 20
bis 50 Gew-% Polyacetylen.

Das Polyolefin ist ein Polymerisat mindestens eines
1-Olefins mit 2 bis 10, vorzugsweise 2 bis 4 Kohlenstoffatomen, beispielsweise Ethylen, Propylen, Buten-1-,
Penten, 1-Methylpenten, Hexen, vorzugsweise Ethylen,
Propylen und Buten-1. In Frage kommen somit Polyethylen, Polypropylen, Polybuten und Copolymerisate von Ethylen mit Propylen oder den anderen genannten 1-Olefinen. Das Polyolefin hat eine Viskositätszahl (VZ) von 100 bis 600 ml/g im Falle von Polyethylen und eine VZ von 150 bis 350 ml/g im Falle von Polypropylen.

Das Polyacetylen ist ein schwarzes Pulver, dessen Eigenschaften nicht bestimmbar sind, da es unschmelzbar und unlöslich ist.

Beim erfindungsgemäßen Verfahren wird ein Polyolefin-Polyacetylen-Blend "in situ" durch Polymerisation hergestellt, indem in einer ersten Stufe mindestens ein 1-Olefin polymerisiert wird und in einer zweiten Stufe Acetylen in den Reaktor eingeleitet wird.

Der Katalysator bei diesem Verfahren besteht aus einer Mischung von Komponente I und Komponente II, wobei Komponente I eine halogenhaltige, insbesondere chlorhaltige, Verbindung der Metalle der IV. bis VI. Nebengruppe des Periodischen Systems, wie z.B. $TiCl_4$, $TiCl_3$, $ZrCl_3$, $VCl_3$, $CrCl_3$ ist. Vorteilhaft sind Metallhalogenide niedrigerer

Wertigkeitsstufen, da sie feste, salzartige Verbindungen darstellen und im Dispergiermittel unlöslich sind. Besonders vorteilhaft ist die Verwendung von $TiCl_3$, welches durch Reduktion von $TiCl_4$ mit aluminiumorganischen Verbindungen, wie Aluminiumdiethylmonochlorid, Aluminiumethylsesquichlorid oder Aluminiumtrialkylen und anschließender Temperung hergestellt wurde.

Geeignet sind weiterhin sogenannte Trägerkatalysatoren, welche sich durch hohe Polymerisationsaktivität und hohe Stereospezifität auszeichnen. Sie werden dadurch hergestellt, daß man beispielsweise wasserfreies Magnesiumchlorid mit einem aromatischen Carbonsäureester vermahlt und das Mahlgut anschließend mit einer Suspension von $TiCl_3$ in einem aliphatischen Kohlenwasserstoff als Dispergiermittel umsetzt (vgl. Deutsche Offenlegungsschrift 28 30 039).

Ein weiterer geeigneter Trägerkatalysator läßt sich nach einem "Eintopfverfahren" durch Vermahlen eines Gemisches aus wasserfreiem Magnesiumchlorid, aromatischem Carbonsäureester, $TiCl_4$ und $PCl_5$ in Gegenwart geringer Mengen eines aliphatischen Kohlenwasserstoffes gewinnen (vgl. Deutsche Offenlegungsschrift 32 11 394).

Weiterhin kann als Trägerkatalysator das Reaktionsprodukt aus Magnesiumalkoholat und $TiCl_4$ verwendet werden (vgl. Deutsche Offenlegungsschrift 17 95 197).

Die Übergangsmetallkomponente wird in einer Konzentration von 5 - 30 mMol/l, vorzugsweise 12 - 20 mMol/l, bezogen auf das Suspensionsmittel, eingesetzt.

Als Komponente II des Katalysatorsystems werden metallorganische Verbindungen der Metalle der I. bis III. Hauptgruppe des Periodischen Systems, wie Butyllithium, Diethylmagnesium, Diethylzink und vorzugsweise Aluminiumalkyle der Formel $AlR_nX_{3-n}$ verwendet, in der R gleiche oder verschiedene Alkylreste mit 1 bis 40 Kohlenstoffatomen und X = R oder ein Halogenatom und n = 2 oder 3 bedeutet. Besonders vorteilhaft sind Aluminiumtrialkyle mit $C_2-C_{12}$-Alkylresten wie Aluminiumtriethyl, Aluminiumtripropyl, Aluminiumtriisobutyl. Ebenso geeignet sind Verbindungen wie Diethylaluminiumchlorid oder Aluminiumethylsesquichlorid (ein Gemisch aus Diethylaluminiummonochlorid und Ethylaluminiumdichlorid). Für die Polymerisation des 1-Olefins wird in der ersten Stufe die Komponente II in einer Konzentration zugegeben, daß das Molverhältnis Al/Ti 1 bis 10, vorzugsweise 2 bis 5 beträgt.

In der zweiten Stufe wird nun Acetylen in die Polymersuspension eingeleitet. Dabei kann die Polymerisation nur an den Katalysator enthaltenden Polyolefinpartikeln stattfinden und man erzielt auf diese Weise eine gleichmäßige Acetylenpolymerisation auf jedem Polyolefinkorn, wodurch auch bei kleinen Polyacetylenbeladungen eine homogene Verteilung des Polyacetylens auf dem Polyolefin gewährleistet ist. Unmittelbar nach Beginn der Acetylenpolymerisation färbt sich die Polymersuspension tief schwarz. Zur Aufrechterhaltung der Polymerisationsaktivität setzt man in regelmäßigen Zeitintervallen frische aluminiumorganische Verbindung zu. Die zudosierten Mengen können in Grenzen variiert werden, man verwendet jedoch vorteilhaft Konzentrationen von 5 - 50 mMol/l, vorzugsweise 10 - 20 mMol/l. Die Dauer der Acetylenpolymerisation und damit die Anzahl der Dosierungen an Komponente II richten sich nach dem gewünschten Anteil an Polyacetylen im Blend.

Nach Beendigung der Polymerisation wird der Katalysator durch Zugabe von Alkohol zersetzt und die Suspension durch mehrmalige Extraktion mit Wasser von Katalysator gereinigt. Schließlich wird das Polymere mittels Filtration vom Dispergiermittel abgetrennt und im Vakuum bei ca. 80°C getrocknet

Nach diesem Verfahren wird ein schwarzes, pulverförmiges Polymerisat erhalten, welches einen "in situ" Blend aus Polyolefin und Polyacetylen darstellt. Daß es sich hierbei um einen Blend und nicht um ein Olefin/Acetylen-Copolymerisat handelt, zeigt sich darin, daß beide Komponenten durch Extraktion mittels eines höhersiedenden Kohlenwasserstoffs getrennt werden können, wobei das Polyolefin gelöst wird und das Polyacetylen ungelöst als Rückstand verbleibt.

Als Suspensionsmittel verwendet man ein inertes Lösungsmittel, wie beispielsweise Erdölfraktionen mit einem Siedebereich von 20 bis 250°C, gesättigte aliphatische und cycloaliphatische Kohlenwasserstoffe, wie z.B. Butan, Pentan, Hexan, Cyclohexan, Methylcyclohexan sowie Aromaten wie Benzol, Toluol, Xylol.

Die Polymerisation wird bei einer Temperatur von 0 bis 120°C, vorteilhaft bei 50 bis 90°C durchgeführt; dabei kann in beiden Polymerisationsstufen die Temperatur gleich oder verschieden sein. Die Acetylenpolymerisation verläuft zwar noch bei einer tieferen Temperatur von ca -60°C, was jedoch durch die von Stufe I zu Stufe II notwendige Abkühlung energetisch ungünstig ist.

Die 1-Olefine (Stufe I) werden bei einem Druck von 1 bis 10, vorzugsweise 1,5 bis 6 bar und das Acetylen (Stufe II) bei maximal 1,5 bar polymerisiert.

Das Molekulargewicht des Polyolefins ist unter anderem für die mechanischen Eigenschaften der Blends bestimmend. Dieses kann in der ersten Stufe in bekannter Weise durch Molekulargewichtsregler, vorzugsweise Wasserstoff, eingestellt werden.

Durch die Verfahrensweise der Olefinpolymerisation können die Eigenschaften des Polyolefin/Polyacetylen-Blends entscheidend beeinflußt werden.

Die erfindungsgemäßen Polyacetylen-Formmassen können nach bekannten Verfahren verarbeitet werden. Formmassen mit niedrigem bis mittlerem Polyacetylen-Gehalt lassen sich mittels Schmelzextrusion zu Strängen, Platten, Profilen, Folien und dergleichen formen. Weiterhin können aus diesen Formmassen durch Spritzgießen definierte Formkörper hergestellt werden. Formmassen mit hohem Polyacetylen-Gehalt werden vorzugsweise in einer Form unter der Einwirkung von Druck und Temperatur zu Formkörpern gesintert.

Weiterhin können durch Variation des Polyacetylen-Gehaltes bestimmte mechanische und elektrische Eigenschaften erreicht werden.

Die erfindungsgemäßen Polyacetylen-Formmassen können zum Herstellen elektrisch leitfähiger Kunststoff-Formteile verwendet werden, beispielsweise Platten.

## Beispiel 1

### a) Herstellung einer $TiCl_3$-Katalysatorkomponente

Zu einer Lösung von 15 ml Aluminiumisoprenyl in 370 ml n-Heptan tropfte man unter Rühren und Kühlen auf -20 bis 0°C innerhalb von 30 Minuten 21,6 ml (200 mMol) Titantetrachlorid.

Nach der Zugabe rührte man noch 2 Stunden, währenddessen sich die Katalysatorsuspension auf Raumtemperatur erwärmte. Man wusch den $TiCl_3$-Niederschlag durch mehrmaliges Rühren und Dekantieren mit 400 ml n-Heptan und erhielt ein feines $TiCl_3$-Pulver von brauner Farbe.

### b) Polymerisation

In einem 1 Liter Glasautoklaven, der mit Rührer, Zuleitungen für Ethylen, Propylen, Acetylen, Wasserstoff und Argon sowie einer Temperaturregelung und Manometer versehen war, legte man 800 ml absolutes Toluol vor. Der Reaktor wurde durch mehrmaliges Aufdrücken von Argon und Entspannen von Luft befreit und auf eine Temperatur von 78°C aufgeheizt. Nun wurden unter Argonüberlagerung 50 mMol Diethylaluminiummonochlorid (als 3 molare Lösung in Toluol) und daraufhin 12,5 mMol $TiCl_3$ zugegeben. Unter Rühren (300 Upm) stellte

0160911

man durch einmaliges Öffnen und Schließen des Wasserstoffventils einen Wasserstoffpartialdruck von 0,2 bar ein und leitete Ethylen unter einem konstanten Druck von 1,2 bar ein; die Polymerisationstemperatur betrug 80°C. Nach 30 Minuten wurde die Ethylenzufuhr geschlossen und die Polymerisation bis zu einem Druck von 0,45 bar weitergeführt. Danach wurde der Reaktor auf Atmosphärendruck entspannt und der Suspension mittels einer Pipette eine 50 ml Probe entnommen, welche in einem Überschuß an Isopropanol zersetzt wurde. Man filtrierte die Probe über eine Glasfritte und trocknete sie im Vakuumtrockenschrank bei 70°C/200 Torr. An dieser Probe wurde die Gesamtmenge des im Reaktor gebildeten Polyethylens sowie dessen Viskosität bestimmt. Man leitete nun in den Reaktor Acetylen, welches zur Reinigung zuvor durch eine Lösung von Pyrogallol, durch Schwefelsäure und durch Phosphorpentoxid geleitet wurde, unter einem konstanten Druck von 1,1 bar während 5 Stunden ein, anschließend wurde 15 Minuten abpolymerisiert. Nach dem Abkühlen auf Raumtemperatur wurde die Polymersuspension in einem separaten Rührgefäß mit 50 ml Isopropanol versetzt und 1 - 2 Stunden bei 70°C unter Stickstoff gerührt. Anschließend wusch man zur Entfernung des Katalysators 4 mal mit Stickstoff gespültem Wasser und heberte die wäßrige Phase ab. Die Polymersuspension wurde filtriert und der Feststoff in Stickstoffatmosphäre bei 80°C/200 Torr getrocknet. Es wurden 50,5 g einer Polyethylen/Polyacetylen-Formmasse mit einem Polyacetylengehalt von 39 Gew-% und einem Schüttgewicht von 410 g/l erhalten.

Gesamtmenge an Polyethylen:       38 g
Viskositätszahl des Polyethylens:   252 ml/g

(Die Viskositätszahlen wurden an 0,1 %igen Lösungen des Polyolefins in Dekahydronaphthalin bei 135°C gemessen).

Zur Messung des Polyolefin/Polyacetylen-Verhältnisses wurden 100 mg des Blends in 50 ml einer Dieselölfraktion (Siedebereich 140-170°) unter Stickstoff 15 Minuten am Rückfluß gekocht und filtriert. Die Filtration führte man vorzugsweise in einer mit etwas Glaswolle belegten Glasfritte in einem auf 120°C temperierten Trockenschrank durch, um das Ausfallen des Polyolefins zu verhindern.

Die Glasfritte wurde nun bei 120°C bis zur Gewichtskonstanz getrocknet und enthielt das Polyacetylen. Im Filtrat wurde das Lösungsmittel bei 80°C im Rotationsverdampfer abgezogen und der aus Polyolefin bestehende Rückstand im Trockenschrank bei 80°C/200 Torr getrocknet.

$$\% \text{ Polyacetylen} = \frac{\text{Auswaage Filterrückstand (mg)}}{\text{Einwaage (mg)}} \times 100 \ \%$$

### Beispiel 2

#### a) Herstellung der Katalysatorkomponente I

In einem 2 Liter Kolben mit Rührer, Tropftrichter und Einleitungsrohr für Stickstoff wurden 63 g $TiCl_4$ als 48 %ige Lösung in einer Benzinfraktion mit einem Siedebereich von ca. 140 bis 170°C vorgelegt und auf -2°C gekühlt. Bei dieser Temperatur wurden unter Rühren innerhalb 3 Stunden 72 ml Aluminiumethylsesquichlorid (45,5 Gew-% $Al(C_2H_5)_2Cl$), gelöst in 767 ml derselben Benzinfraktion, zugetropft. Man ließ zwei Stunden bei 0°C und 12 Stunden bei Raumtemperatur nachreagieren. Danach wusch man den braunen Niederschlag fünfmal mit frischem Dispergiermittel, erhitzte die Suspension unter Rühren auf 95°C und hielt sie 4 Stunden bei dieser Temperatur. Nach nochmaligem Auswaschen des Festkörpers mit frischem Dispergiermittel ließ man eine weitere Wärmebehandlung von 10 Stunden bei 110°C folgen, nach welcher man das Dispergiermittel ein letztes Mal erneuert und die Suspension auf eine Konzentration von 2 Mol/Liter $TiCl_3$ einstellte. Der Gehalt der Suspension an $TiCl_3$ wurde mit einer Ce-IV-Lösung bestimmt.

## b) Polymerisation

Nach der im Beispiel 1 b) beschriebenen Weise legte man in dem Glasautoklaven 800 ml Toluol vor und gab bei einer Temperatur von 78°C 25 mMol Aluminiumtriethyl (als 3 molare Lösung in Toluol) und anschließend 12,5 mMol der TiCl$_3$-Katalysatorkomponente zu. Unter Rühren (300 Upm) leitete man Ethylen unter einem konstanten Druck von 1,5 bar ein und polymerisierte bei einer Temperatur von 80°C. Nach 60 Minuten wurde die Ethylenzufuhr beendet; es wurde 20 Minuten abpolymerisiert, der Reaktor entgast und eine 50 ml Probe entnommen. Man dosierte nun über ein Druckschleuse weitere 25 mMol Aluminiumtriethyllösung ein und polymerisierte Acetylen bei 80°C unter einem konstanten Druck von 1,1 bar über einen Zeitraum von 7 Stunden, wobei jede Stunde weitere 25 mMol Aluminiumtriethyl zugegeben wurden. Am Ende der Polymerisation wurde 15 Minuten abpolymerisiert und die Suspension entsprechend Beispiel 1 b) aufgearbeitet.

Es wurden 40 g einer Polyethylen/Polyacetylen-Formmasse mit einem Polyacetylengehalt von 48 Gew-% und einem Schüttgewicht von 250 g/l erhalten.

Gesamtmenge an Polyethylen:          20 g
Viskostitätszahl des Polyethylens: 505 ml/g

## Beispiel 3

Nach der im Beispiel 1 b) beschriebenen Weise legte man in den Glasautoklaven 800 ml Toluol vor und gab bei einer Temperatur von 78°C 25 mMol Aluminiumtriethyl und anschließend 12,5 mMol der nach Beispiel 2 a) dargestellten TiCl$_3$-Katalysatorkomponente zu. Unter Rühren (300 Upm) drückte man 0,7 bar Wasserstoff auf, leitete Ethylen unter einem konstanten Druck von 1,5 bar ein und polymerisierte bei 80°C während 40 Minuten. Dann wurde innerhalb von 20 Minuten auf einen Enddruck von 0,7 bar abpolymerisiert, der Reaktor entgast und eine 50 ml Probe entnommen. Man dosierte nun über eine Druckschleuse weitere 25 mMol Aluminiumtriethyllösung ein und polymerisierte Acetylen bei 80°C unter einem konstanten Druck von 1,1 bar während 1 Stunde. Nach dem Abpolymerisieren wurde der Reaktor entgast und die Suspension entsprechend Beispiel 1 b) aufgearbeitet.

Es wurden 22 g einer Polyethylen/Polyacetylen-Formmasse mit einem Polyacetylengehalt von 26 Gew-% und einem Schüttgewicht von 280 g/l erhalten.

| | |
|---|---|
| Gesamtmenge an Polyethylen: | 20 g |
| Viskositätszahl des Polyethylens: | 113 ml/g |
| Schmelzindex des Blends MFI 230/20: | 51,4 g/10 min |

Beispiel 4

Wie im Beispiel 2 beschrieben, leitete man in die $TiCl_3$ und $Al(C_2H_5)_3$ enthaltende Suspension Ethylen unter 1,5 bar Druck während 65 Minuten und daraufhin Acetylen unter 0,09 bar über einen Zeitraum von 30 Minuten ein.

Es wurden 22 g einer Polyethylen/Polyacetylen-Formmasse mit einem Polyacetylengehalt von 2 Gew-% und einer Schüttdichte von 220 g/l erhalten.

| | |
|---|---|
| Gesamtmenge an Polyethylen: | 21 g |
| Viskositätszahl des Polyethylens: | 380 ml/g |

Beispiel 5

Wie in Beispiel 2 beschrieben, leitete man in die $TiCl_3$ und $Al(C_2H_5)_3$ enthaltende Suspension Ethylen unter 1,5 bar Druck während 30 Minuten und daraufhin Acetylen unter 1,1 bar Druck über einen Zeitraum von 7 Stunden ein, wobei stündlich 25 mMol $Al(C_2H_5)_3$-Lösung zudosiert wurden.

Es wurden 17 g einer Polyethylen/Polyacetylen-Formmasse mit einem Polyacetylengehalt von 68 Gew-% und einem Schüttgewicht von 250 g/l erhalten.

Gesamtmenge an Polyethylen: 9,7 g
Viskositätszahl des Polyethylens: 257 ml/g

Beispiel 6

a) Herstellung einer Trägerkatalysatorkomponente I

11 g $Mg(OC_2H_5)_2$ wurden in 50 ml einer Benzinfraktion mit einem Siedebereich von 130 - 160°C suspendiert und mit 200 ml einer 1 molaren Lösung von $TiCl_4$ in dieser Benzinfraktion versetzt. Die Suspension wurde 15 Stunden unter Rückfluß gekocht.

Anschließend reinigte man den Niederschlag durch Dekantieren und fünfmaliges Nachwaschen mit 150 ml der Benzinfraktion. Das Volumen der Suspension wurde auf 250 ml aufgefüllt. Der Titangehalt der Suspension wurde colorimetrisch mit $H_2O_2$ bestimmt. 10 ml dieser Suspension enthielten 4,1 mMol Titanverbindung.

b) Polymerisation

Entsprechend dem Beispiel 1 b) legte man in dem Glasautoklaven 800 ml Toluol vor und gab bei einer Temperatur von 75°C 25 mMol Aluminiumtriethyl (als 3molare Lösung in Toluol) und anschließend 6 mMol der obigen Katalystorkomponente zu. Unter Rühren (300 Upm) leitete man Ethylen unter einem konstanten Druck von 1,5 bar ein und polymerisierte bei 80°C. Nach 65 Minuten wurde die Ethylenzufuhr gestoppt, 20 Minuten abpolymerisiert und nach Entgasung des Reaktors eine 50 ml Probe genommen. Man dosierte nun weitere 25 mMol Aluminiumtriethyl ein und polymerisierte Acetylen bei 80°C unter einem konstanten Druck von 1,1 bar über einen Zeitraum von 8 Stunden, wobei jede Stunde weitere 25 mMol Aluminiumtriethyl zugegeben wurden. Am Ende der Polymerisation wurde die Suspension mit Isopropanol zersetzt und nach Zugabe von 20 ml konzentrierter HCl entsprechend Beispiel 1 b) aufgearbeitet.

Es wurden 26 g einer Polyethylen/Polyacetylen-Formmasse mit einem Polyacetylengehalt von 44 Gew-% und einem Schüttgewicht von 350 g/l erhalten.

Gesamtmenge an Polyethylen:           12 g
Viskositätszahl des Polyethylens:      360 ml/g

Beispiel 7

In einem 1 Liter Vierhalskolben legte man 750 ml absolutes Toluol vor, spülte mehrmals mit Argon und gab 9,75 mMol Titantetrabutylat und 37,5 mMol Aluminiumtriethyl (als 3-molare Lösung in Toluol) unter Rühren zu. Danach leitete man Acetylen ein, wobei die Temperatur auf ca. 90°C anstieg und schwarzes Polyacetylen ausfiel. Nach 20 Minuten wurde die Suspension auf Raumtemperatur abgekühlt, das Polyacetylen durch Filtration abgetrennt und bei 80°C/200 Torr getrocknet. Ausbeute 12 g Polyacetylen.

Beispiel 8

An den Formmassen der Beispiele 1 bis 6 wurden die Kugeldruckhärte nach DIN 53 456 und die Reißdehnung nach DIN 53 455 (gestanzte Schulterstäbe, Einspannlänge 50 mm, Folienstärke 1,2 mm, Abzugsgeschwindigkeit 20 mm/min) gemessen. Die Ergebnisse sind in der Tabelle 1 zusammengefaßt:

Tabelle 1

| Gew-% Polyacetylen | Kugeldruckhärte (N/mm²) | Reißdehnung (%) |
|---|---|---|
| 0 *) | 52 | 520 |
| 2 (Beispiel 4) | 53 | 420 |
| 26 (Beispiel 3) | 62 | 38 |
| 39 (Beispiel 1) | 75 | 9,2 |
| 44 (Beispiel 6) | | |
| 48 (Beispiel 2) | 83 | 3,6 |
| 68 (Beispiel 5) | 115 | 1,8 |
| 100 **) | 267 | |

*) Hergestellt durch Polymerisation von Ethylen gemäß Beispiel 2 b)
**) Hergestellt gemäß Beispiel 7

Die Härte steigt somit mit dem Polyacetylengehalt an, während die Reißdehnung abnimmt. Je nach Verwendungszweck der Formmasse kann somit der Gehalt an Polyacetylen nach Bedarf gewählt werden.

Beispiel 9

In eine runde Preßform von 120 mm Druchmesser gab man je 8 g eines der nach den Beispielen 1 bis 6 hergestellten pulverförmigen Polyacetylen-Formmassen und heizte innerhalb von 5 Minuten auf 190°C. Daraufhin preßte man die Proben bei dieser Temperatur unter einer Druckbelastung von 90 kg/cm² während 5 Minuten. Unter einer Belastung von 200 kg/cm² kühlte man die Form innerhalb von 10 Minuten auf Raumtemperatur ab. Man erhielt eine 600 µm dicke, schwarze und flexible Folie. Die Flexibilität der Folie wurde mit zunehmender Viskositätszahl des Polyolefins und abnehmendem Polyacetylengehalt in der Formmasse größer.

Beispiel 10

Die elektrischen Eigenschaften der Polyacetylen-Formmassen gemäß den Beispielen 1 bis 6 wurden durch Messen des spezifischen Durchgangswiderstandes nach DIN 53 482 an Preßplatten mit einem Durchmesser von 50 mm und einer Stärke von 0,6 bis 0,7 mm gemessen. In der Tabelle 3 ist der Verlauf des spezifischen Durchgangswiderstandes in Abhängigkeit vom Polyacetylen-Gehalt dargestellt. Polyethylen ist ein Isolator und hat demzufolge einen hohen spezifischen Durchgangswiderstand von ca. $5 \times 10^{13}$ ($\Omega \times cm$). Demgegenüber besitzt Polyacetylen Halbleitereigenschaften, so daß sich mit zunehmendem Polyacetylen-Gehalt in der Formmasse die elektrische Leitfähigkeit erhöht. Bei einem Polyacetylen-Gehalt über 20 % fällt der Durchgangswiderstand stark ab und erreicht bei einem Polyacetylenanteil von 60 % ca. $10^{10}$ ($\Omega \times cm$), was einer Erhöhung der elektrischen Leitfähigkeit um das $10^4$-fache entspricht.

Eine weitere Steigerung der Leitfähigkeit

läßt sich durch Dotieren mit Elektronenakzeptoren erreichen, wobei beispielsweise Jod als Dotierungsmittel verwendet werden kann. Es wurde dabei so verfahren, daß man die Proben nach Messen des spezifischen Durchgangswiderstandes in eine 2 %ige Lösung von Jod in Isopentan über einen Zeitraum von 48 Stunden eintauchen ließ. Nach dieser Zeit wurden die Proben zur Entfernung von Isopentan und überschüssigem Jod einem 24-stündigen Vakuum von 0,01 Torr ausgesetzt. Die Jodaufnahme ließ sich gravimetrisch bestimmen und ist in Tabelle 3 dargestellt, nach der sich eine dem Polyacetylen-Gehalt linear zunehmende Jod-Dotierung ergab. Nach der Dotierung wurden die Proben erneut auf ihren spezifischen Durchgangswiderstand hin gemessen. Es zeigte sich, daß die Leitfähigkeit nochmals um das 100-fache gesteigert werden konnte.

Tabelle 2

| Gew-% Polyacetylen | Spezifischer Durchgangswiderstand ($\Omega$ x cm) | | Jod-Aufnahme (Gew-%) |
|---|---|---|---|
| | undotiert | dotiert | |
| 0[*] | $8 \times 10^{13}$ | $6 \times 10^{13}$ | 0,9 |
| 2 (Beispiel 4) | $7 \times 10^{13}$ | $5,8 \times 10^{13}$ | 1,7 |
| 26 (Beispiel 3) | $1,7 \times 10^{13}$ | $1,4 \times 10^{12}$ | 12 |
| 39 (Beispiel 1) | $1,7 \times 10^{11}$ | $7,5 \times 10^{9}$ | 17 |
| 48 (Beispiel 2) | $3,3 \times 10^{10}$ | $7 \times 10^{8}$ | 20 |
| 68 (Beispiel 5) | $1,4 \times 10^{10}$ | $8 \times 10^{7}$ | 28 |
| 100[**] | $1,2 \times 10^{10}$ | $4,5 \times 10^{7}$ | 40 |

[*]    Hergestellt durch Polymerisation von Ethylen gemäß Beispiel 2 b)

[**]  Hergestellt gemäß Beispiel 7

## Beispiel 11

In einem 15 Liter-Reaktor, welcher mit Rührer, Heizeinrichtung, Zuleitungen für Ethylen, Acetylen, Wasserstoff und Inertgas, einer Druckschleuse sowie mit einem Manometer und einer Regelung für die Temperatur ausgerüstet war, wurden 10 l trockenes Toluol vorgelegt. Durch mehrmaliges Aufdrücken von Inertgas und Entspannen wurde die Luft aus dem Reaktor verdrängt. Dann wurde der Reaktorinhalt auf eine Temperatur von 75°C aufgeheizt und 313 mMol Aluminiumtriethyl als 3-molare Lösung in Toluol und 156 mMol Ti der gemäß Beispiel 2 hergestellten Katalysatorkomponente I über die Druckschleuse eingeführt. Durch einmaliges kurzeitiges Öffnen und Schließen des Wasserstoffventils wurde im Reaktor ein Wasserstoffpartialdruck von 0,5 bar eingestellt. Danach leitete man bei einer Temperatur von 80°C 60 Minuten lang Ethylen unter einem konstanten Druck von 1,5 bar ein und ließ den Kesseldruck durch Abpolymerisieren des Ethylens auf 0,4 bar sinken. Sodann wurde der Reaktor auf Atmosphärendruck entspannt und eine Polymerprobe gezogen und untersucht.

Ausbeute 303 g Polyethylen mit einer Viskositätszahl von 126 ml/g und einem Schmelzindex MFI 230/5 von 75 g/10 min.

Sodann führte man weitere 313 mMol Aluminiumtriethyl in den Reaktor ein und polymerisierte Acetylen bei einer Temperatur von 80°C 6 Stunden lang, wobei alle Stunde 313 mMol Aluminiumtriethyl zugeführt wurden. Der Innendruck im Reaktor stieg dabei auf 1,0 bar. Nach Beendigung der Acetyleneinleitung wurde die Polymerisation noch 15 Minuten weitergeführt und der Reaktor entgast.

Die Suspension wurde mit 600 ml Isopropanol versetzt und zur Zersetzung des Katalysators 1,5 Stunden bei 70°C unter Inertgasatmosphäre gerührt. Danach wurde sie viermal mit luftfreiem, entsalztem Wasser extrahiert. Der Festkörper wurde analog Beispiel 1 abgetrennt und getrocknet. Man erhielt 413 g einer Polyacetylen-Formmasse mit einem Polyacetylengehalt von 31 Gew-%, einem Schüttgewicht von 280 g/l und einem MFI 230/5 von 1,5 g/10 min.

Die Formmasse wurde mit 0,2 Gew-% Calciumstearat, 0,2 Gew-% Pentaerythrithyl-tetrakis [3-(3,5-di-t-butyl-4-hydroxyphenyl)-propionat] und 0,2 Gew-% 2,6-Di-t-butyl-p-kresol, jeweils bezogen auf das Polyethylen, versetzt und mittels eines senkrecht stehenden Labor-Einschneckenextruders (D = 20 mm, L = 21 D) bei einer Temperatur von 200°C zu einem Strang extrudiert.

0160911

PATENTANSPRÜCHE: HOE 84/F 104

1. Verfahren zur Herstellung einer Polyacetylen-Formmasse, bestehend aus 95 bis 40 Gew-% eines hochdichten kristallinen Polyolefins und 5 bis 60 Gew-% Polyacetylen, durch aufeinanderfolgendes Polymerisieren von Olefin und Acetylen, dadurch gekennzeichnet, daß man in der ersten Stufe mindestens ein 1-Olefin mit 2 bis 10 Kohlenstoffatomen bei einer Temperatur von 0 bis 120°C und einem Druck von 1 bis 10 bar in Gegenwart eines Mischkatalysators, welcher aus einer halogenhaltigen Verbindung eines Metalls der IV. bis VI. Nebengruppe des Periodensystems (Komponente I) und einer metallorganischen Verbindung eines Metalls der I. bis III. Hauptgruppe des Periodensystems (Komponente II) besteht, polymerisiert und in der zweiten Stufe die Polymerisation von Acetylen bei einer Temperatur von 0 bis 120°C und einem Druck von 0 bis 1,5 bar unter Zugabe zusätzlicher Mengen der Katalysatorkomponente II durchführt.

2. Verfahren nach Anspruch 1, dadurch gekennzeichnet, daß man in der ersten Stufe Ethylen und/oder Propylen bei einer Temperatur von 0 bis 120°C und einem Druck von 1 bis 10 bar in Gegenwart eines Mischkatalysators, welcher aus einer halogenhaltigen Titanverbindungen (Komponente I) und einer aluminiumorganischen Verbindung (Komponente II) besteht, polymerisiert und in der zweiten Stufe die Polymerisation von Acetylen bei einer Temperatur von 0 bis 120°C und einen Druck von 0 bis 1,5 bar unter Zugabe zusätzlicher Mengen der aluminiumorganischen Verbindung durchführt.

3. Verwendung der gemäß Anspruch 1 hergestellten Formmasse zum Herstellen von elektrisch leitfähigen Kunststoff-Formteilen.